# EUROPEAN PATENT SPECIFICATION

(11) **EP 3 138 697 B1**
(45) Date of publication and mention of the grant of the patent: **27.12.2017**
(21) Application number: 15183378.7
(22) Date of filing: 01.09.2015
(51) Int. Cl.: B60B 5/02, B29C 70/30, B60B 21/06

(54) **MANUFACTURING METHOD AND STRUCTURE OF CARBON FIBER RIMS**
HERSTELLUNGSVERFAHREN UND -STRUKTUR VON KOHLENSTOFFFASERFELGEN
PROCÉDÉ DE FABRICATION ET STRUCTURE DE JANTES EN FIBRE DE CARBONE

(43) Date of publication of application: 08.03.2017
(73) Proprietor: Alex Global Technology, Inc., Tainan City (TW)
(72) Inventor: Chen, Wei-Chin, Tainan City (TW)
(74) Representative: Lang, Christian

(56) References cited:
- CN-A- 102 343 762
- TW-A- 200 950 990
- US-A1- 2015 210 111

## Description

### BACKGROUND OF THE INVENTION

### Field of Invention

The disclosure relates to a manufacturing method and structure of a carbon fiber rim, especially relates to a rim frame's embryo having many through holes and covered by a carbon fiber cloth, whereby a rim having a light weight and a strong structure is obtained.

### Description of Related Art

In addition to as a basic means of transportation, bicycles also has composite functions of recreation and sports. After the elevation of research and development ability and the progress of technology, the appearance, ride comfort, body strength, weight, and speed of bicycle all become development focus. Especially for professional athletics racing bike, ride comfort, body strength, weight, and speed are absolutely the goals of the riders.

In order to develop the bicycle toward the direction of lightweight construction, wheels made of carbon fibers have replaced the traditional metal wheels to effectively reduce the total weight of bicycles.

Traditional molding technology of carbon fiber wheels is setting up an annular pocket and filling air into the annular pocket to inflate the annular pocket first, and then multi layers of carbon fiber cloth sequentially cover the annular pocket, wherein the number of the layers of the carbon fiber cloth is determined by the structural strength. Usually, the surface set up by spokes need higher structure strength, and thus 7 layers of carbon fiber cloth need to be covered thereon. The needed structure strength of the other parts of the wheels is lower, and thus 5 layers of carbon fiber cloth need to be covered thereon. However, since manufacturing the traditional carbon fiber wheels needs sequentially covering multi layers of carbon fiber cloth, the manufacturing construction is quite time-consuming and labor-consuming. In addition, it also has to be noticed that whether air is remained between the layers of the carbon fiber cloth. If air is remained, the layers of the carbon fiber cloth cannot be completely and smoothly laminated, and defective with local protruding is thus produced. Therefore, the traditional manufacturing method cannot effectively decrease the defect rate of the carbon fiber wheels. Moreover, the price of the carbon fiber cloth is expensive, and the cost of laminating multi layers of carbon fiber cloth is thus increased. The reasons above all make the price of the carbon fiber cloth wheels not close to the people.

Patent TW 1308527 B discloses "[a] manufacturing method of bicycle rim." The method laminates multi layers of carbon fiber prepregs to form a primary embryo of a rim. The primary embryo of the rim is placed in a mold to be inflated according to a 3-stage procedure. The outer surfaces of the primary embryo of the rim are forced to be tightly fitted into the inner surface of the mold. At the same time, the primary embryo of the rim is heated to form a secondary embryo of the rim. Finally, the secondary embryo of the rim is set by heating, and the surface of the secondary embryo of the rim is processed to obtain a carbon fiber rim of a bicycle. This method still has the disadvantages of the traditional manufacturing method of carbon fiber wheels. That is, 5-7 layers of carbon fiber prepregs are needed, and thus the manufacturing is time-consuming, high cost, and the defect rate cannot be decreased, as well as it has to be noticed that whether bubbles are generated between adjacent layers when laminating.

Moreover, although the rim made of carbon fiber cloth has the excellent effect of light weight, the carbon fiber wheel cannot meet the requirement of the structure strength and thus deformed easily.

Therefore, some bicycle practitioners further develop bicycle wheel's structure, such as "manufacturing method and structure of bicycle rim" disclosed in TW 200950990A. The manufacturing method includes:
A. forming, wherein a metal material is formed into a tubular body;
B. jointing, wherein two terminals of the tubular body are jointed; C. rounding, wherein the jointed tubular body is molded to a rim;
D. drilling, wherein the rim is drilled to form several spoke coupling holes;
E. drilling weight decreasing holes, wherein the rim is drilled to form several weight decreasing holes;
F. surface treatment, wherein the edges of the rim are trimmed and the surface of the rim is polished;
G. covering carbon fibers, wherein the surface of the weight decreasing holes and the rim is covered with carbon fibers to seal the weight decreasing hole, and a rim structure is formed.
However, in TW 200950990A, only the weight decreasing holes of the rim are filled with carbon fibers and only the edges of the carbon fibers are joined with the edges of the weight decreasing holes. Therefore, the effect of increasing the structure strength is not obvious.

### SUMMARY

One purpose of this invention is providing a manufacturing method and structure of a carbon fiber rim. Under the premise of lightweight rim, the excellent structure strength as well as time saving, labor saving, cost decreased in the manufacturing method and structure of the carbon fiber rim may be reached.

The purpose and effect of this invention is reached by the following means of specific techniques.

A method of manufacturing carbon fiber rim is provided. The steps comprise:
A. forming a metal strip having a needed shape by heating a metal substrate to a moldable temperature and then extruding, wherein the metal strip comprises two side walls, a connecting wall connecting opposite terminal surfaces of the side walls, an inner rim wall connecting the radial inner edges of the side walls to form a space surrounded by the side walls, the connecting wall, and the inner rim wall;
B. connecting two terminals of the strip to form a circle as a rim frame's embryo;
C. forming through holes and spoke coupling holes by milling the rim frame's embryo to form a rim frame, wherein the spoke coupling holes was formed on the inner rim wall and at positions not corresponding to any through hole but disposed between the through holes, and spoke coupling elements are disposed in the spoke coupling holes;
D. performing a surface roughening treatment on the rim frame having the through holes and the spoke coupling holes thereon to increase roughness of the rim frame's surface;
E. covering a carbon fiber cloth by trimming the carbon fiber cloth to a suitable shape and then covering the rim frame and the through holes by the trimmed carbon fiber cloth;
F. heatsetting the rim frame covered by the trimmed carbon fiber cloth in a model to form a carbon fiber layer on the rim frame and thus form a semi-finished carbon fiber rim; and
G. treating a surface of the semi-finished carbon fiber rim to form a finishing carbon fiber rim of a bicycle.

In the method of manufacturing carbon fiber rim described above, a material of the metal substrate is one of aluminum alloy and magnesium alloy.

In the method of manufacturing carbon fiber rim described above, a method of treating the surface of the semi-finished carbon fiber rim comprises steps of polishing the surface and spraying a protective layer.

In the method of manufacturing carbon fiber rim described above, the rim frame is covered by 1-2 layers of the carbon fiber cloth.

In the method of manufacturing carbon fiber rim described above, the inner rim wall between the spoke coupling holes is arcuately recessed toward the connecting wall or arcuately protruded away from the connecting wall.

In the method of manufacturing carbon fiber rim described above, through grooves are further formed by milling the rim frame and positioned on the side walls above the connecting wall, and each of the through grooves is at a position corresponding to each of the through holes.

In the method of manufacturing carbon fiber rim described above, the through holes is formed by milling along the two side walls of the rim frame's embryo at a predetermined interval, or formed by milling along the two side walls and the inner rim wall of the rim frame's embryo at a predetermined interval to make the range of each through hole covers the two side walls and the inner rim wall.

A structure of a carbon fiber rim, which is made by the method above, is provided. The carbon fiber rim comprises: a rim frame and a carbon fiber layer covering thereon. The rim frame comprises two side walls, a connecting wall connecting opposite terminal surfaces of the side walls, an inner rim wall connecting the radial inner edges of the side walls to form a space surrounded by the side walls, the connecting wall, and the inner rim wall, a plurality of through holes, and a plurality of spoke coupling holes. The spoke coupling holes at positions not corresponding to any through hole and disposed between the through holes are formed on the inner rim wall, and spoke coupling elements are disposed in the spoke coupling holes. The carbon fiber layer covers a surface of the rim frame and the through holes, as well as is penetrated by the spoke coupling elements to fix a covering position of the carbon fiber layer.

The advantages of this invention include:
1. The milled through holes are disposed along the two side walls or both the two side walls and the connecting walls at a predetermined interval. Therefore, the spoke coupling elements can be installed on the spoke coupling holes through those milled though holes more easily and conveniently.
2. The spoke coupling elements are well installed before covering the carbon fiber cloth on the surface of the rim frame. Therefore, at the time of covering the set carbon fiber layer, holes can be drilled on the carbon fiber cloth to correspondingly install the spoke coupling element protruding from the rim frame and conveniently locate the covered carbon fiber cloth.
3. The weight of the metal rim frame is decreased to the lightest weight by milling the through holes. In addition, the structure strength of the finishing rim can be increased by covering carbon fiber layers on the surface of the rim frame. Therefore, the carbon fiber rim has advantages of both light weight and good structure strength.
4. The carbon fiber rim of this invention is made by using the metal material as the rim frame and then laminating carbon fiber cloth on the surface of the rim frame. Therefore, the number of laminating carbon fiber cloth layers can be greatly decreased to decrease the use amount of carbon fiber cloth to reach the effect of cost down.
5. Since the carbon fiber rim of this invention can greatly decrease the number of laminating carbon fiber cloth layers, the working hours and processes also can be reduced to increase the rate of manufacturing process and capacity.
6. Since the carbon fiber rim of this invention can greatly decrease the number of laminating carbon fiber cloth layers, the occurring probability of bubbles is decreased to increase the yield.

### BRIEF DESCRIPTION OF THE DRAWINGS

Fig. 1 is a process flow diagram of manufacturing a carbon fiber rim of this invention.
Fig. 2 is a radial cross-sectional diagram of a rim frame's embryo of this invention.
Fig. 3 is a perspective diagram of one section of a rim frame of this invention.
Fig, 4 is a perspective diagram of one section of a rim frame of this invention, and spoke coupling elements are disposed in spoke coupling holes.
Fig. 5 is an exploded perspective diagram of one section of a rim frame and carbon fiber cloth of this invention.
Fig. 6 is a perspective diagram of one section of a finishing carbon fiber rim of this invention.
Fig. 7 is a cross-sectional diagram along A-A line in Fig. 6.
Fig. 8 is a cross-sectional diagram along B-B line in Fig. 6.
Fig. 9 is a perspective diagram of one section of a rim frame according to a second embodiment of this invention.
Fig. 10 is a perspective diagram of one section of a rim frame according to a third embodiment of this invention.
Fig. 11 is a perspective diagram of one section of a rim frame according to a fourth embodiment of this invention.

### DETAILED DESCRIPTION

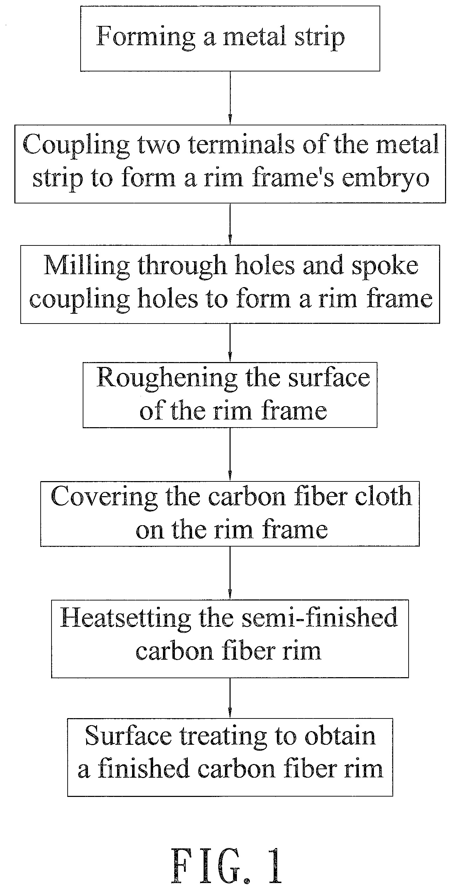

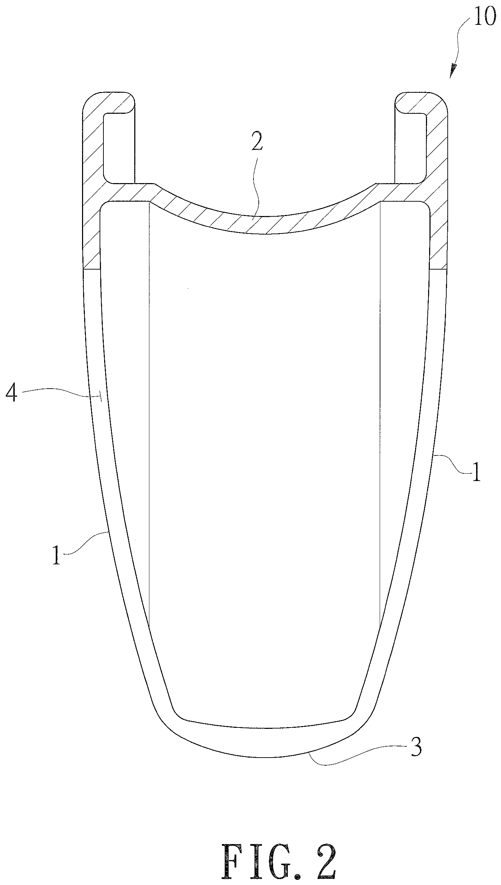

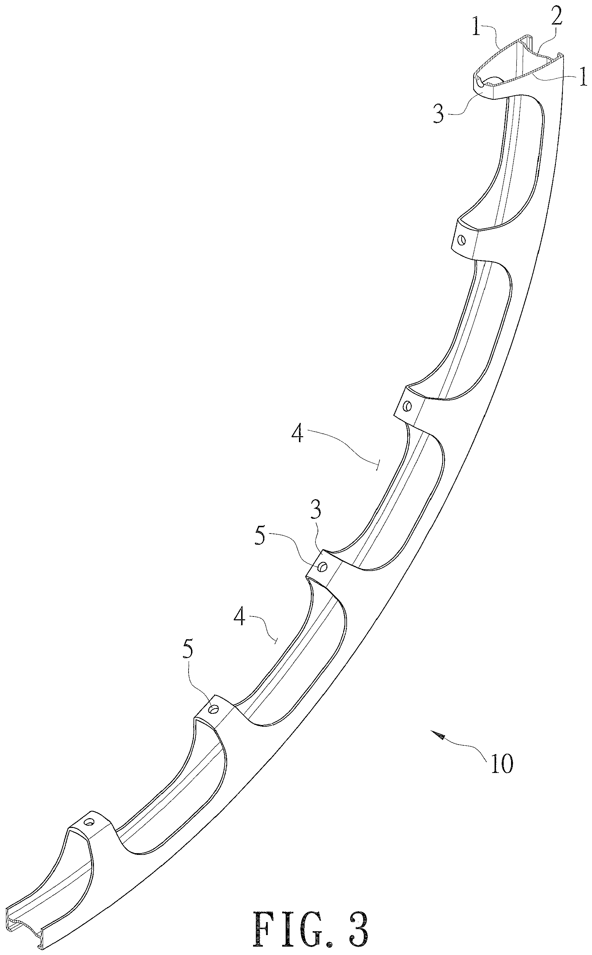

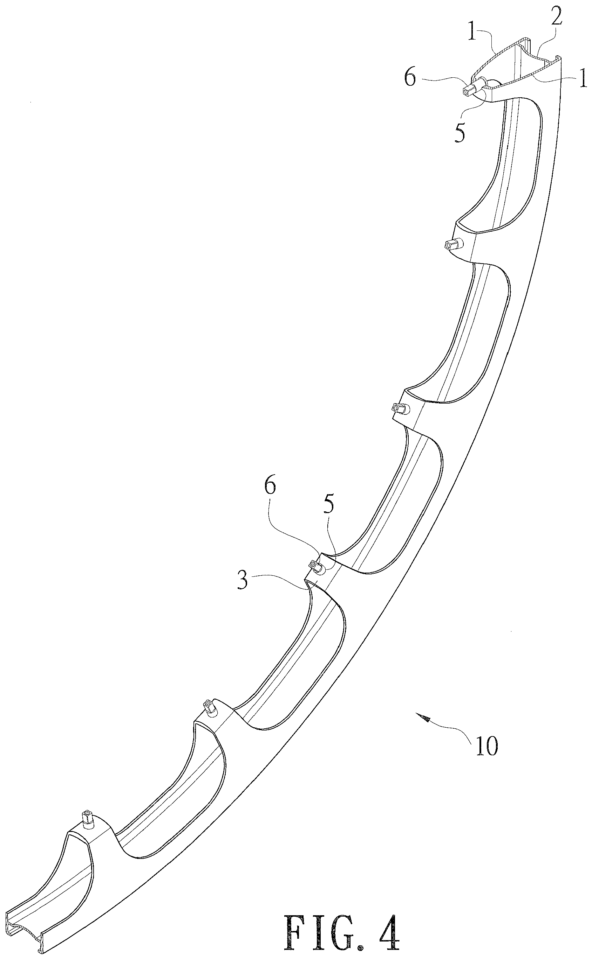

Referring to Fig. 1, which is a process flow diagram of manufacturing a carbon fiber rim according to a preferred embodiment of this invention. The manufacturing method of carbon fiber rim of this invention comprises the following steps:
A. A metal strip is formed by heating a metal substrate to a moldable temperature and then extrusion molding the plastic metal to form the metal strip having a needed shape (please also refer to Fig. 2). The metal strip comprises two side walls (1), a connecting wall (2) connecting opposite terminal surfaces of the side walls (1), an inner rim wall (3) connecting the radial inner edges of the side walls (1) to form a space surrounded by the side walls (1), the connecting wall (2), and the inner rim wall (3).
B. Two terminals of the strip are connected to form a circle as a rim frame's embryo.
C. Through holes (4) and spoke coupling holes (5) (in Fig. 3) are formed by milling the rim frame's embryo to form a rim frame (10). The through holes (4) (in Figs. 3-5) is formed by milling along the two side walls (1) and the inner rim wall (3) of the rim frame's embryo to make each of the through holes (4) cover the two side walls (1) and the inner rim wall (3). The spoke coupling holes (5) was formed on the inner rim wall (3), and the spoke coupling holes (5) and the through holes (4) are alternatively disposed. Thus, two sides of each of the sole coupling holes (5) are adjacent to the through holes (4). Spoke coupling elements (6) are disposed in each of the spoke coupling holes (5) (in Fig. 4).
D. A surface roughening treatment is performed. The surface of the rim frame (10) having the through holes (4) and the spoke coupling holes (5) thereon is roughened to increase the roughness of the rim frame (10).

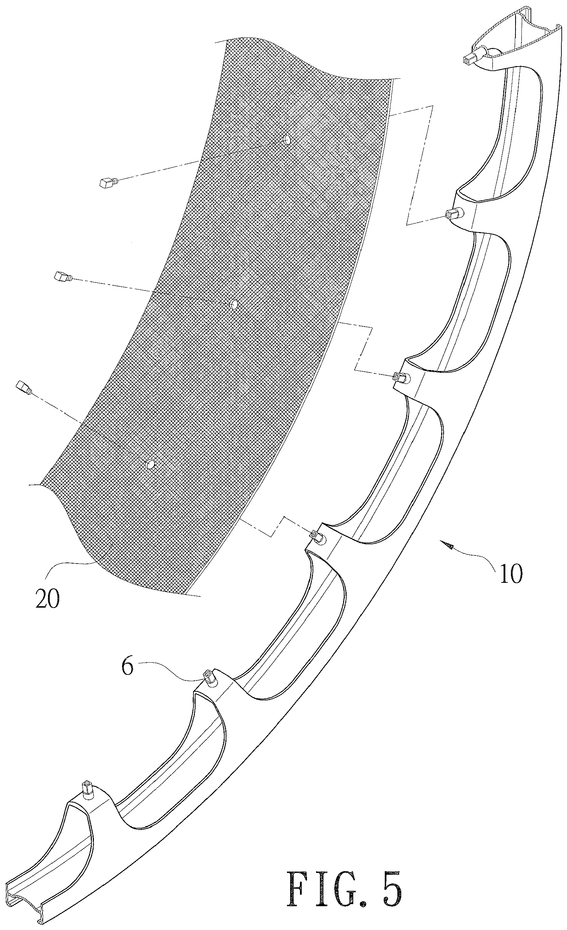

E. A carbon fiber cloth (20) is covered (in Fig. 5). The carbon fiber cloth (20) is trimmed to a suitable shape and then covered on the surface of the rim frame (10) and the through holes (4) at the same time. At the same time, the carbon fiber cloth is also penetrated by the spoke coupling elements (6) to fix the covering position of the carbon fiber cloth (20).

F. The rim frame (10) covered by the trimmed carbon fiber cloth (20) in a model is heatset to form a carbon fiber layer (30) on the rim frame (10) and thus a semi-finished carbon fiber rim is formed.

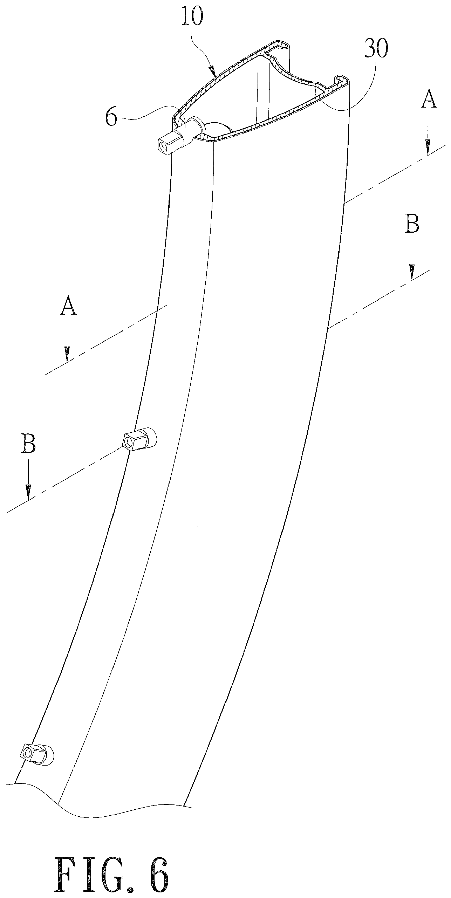

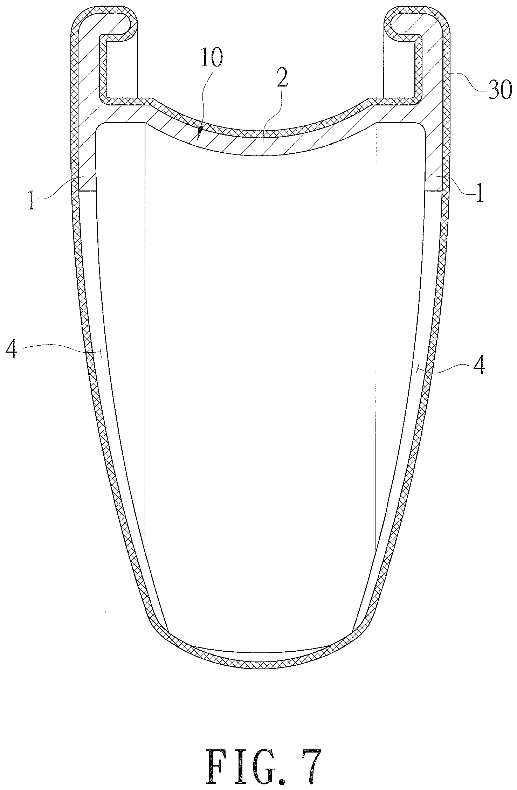

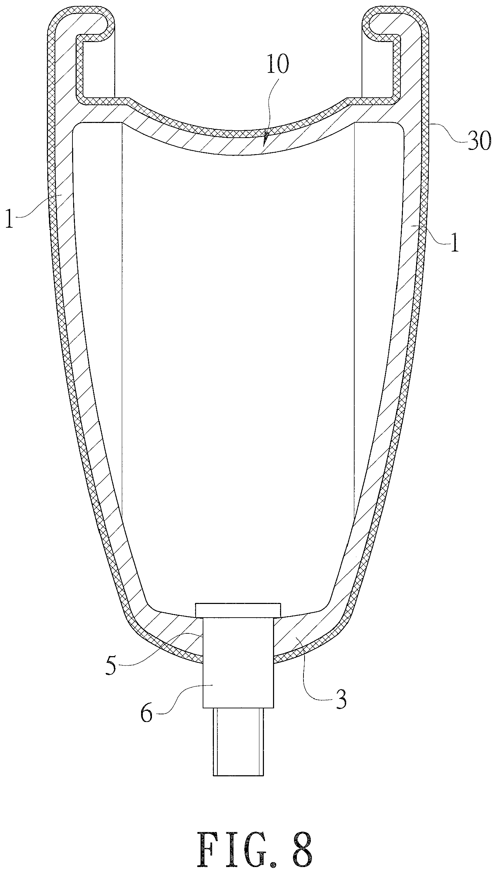

G. The surface of the semi-finished carbon fiber rim covered by the carbon fiber cloth (20) is treated by, for example, spraying a protective layer and surface polishing etc., to obtain a finishing carbon fiber rim (in Figs. 6-8).

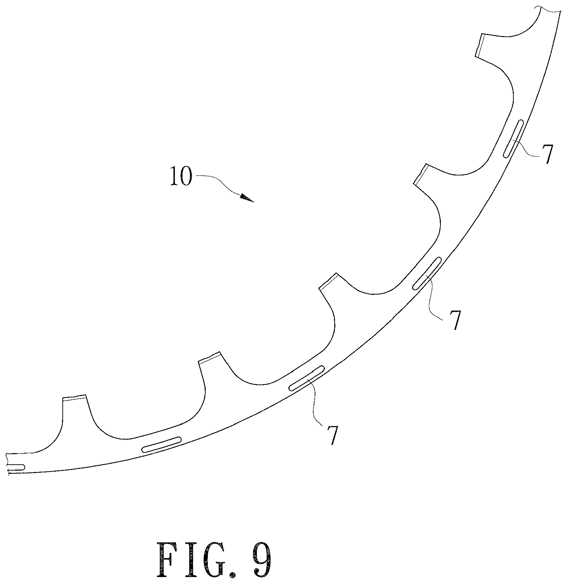

In a second preferred embodiment of this invention, plural through grooves (7) are formed by milling in the step C. These through grooves (7) are located at positions on the side walls (1) above the connecting wall (2) and corresponding to each of the through holes (4) (please refer to Fig. 9).

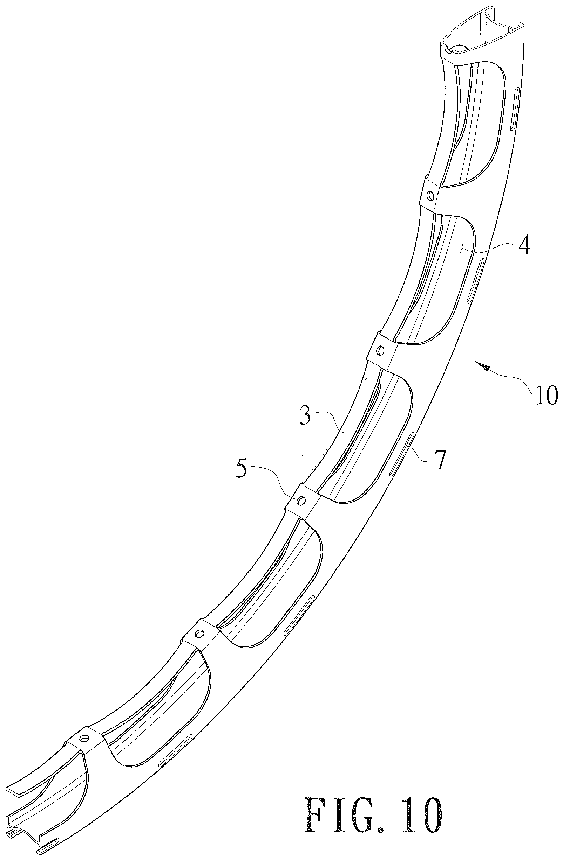

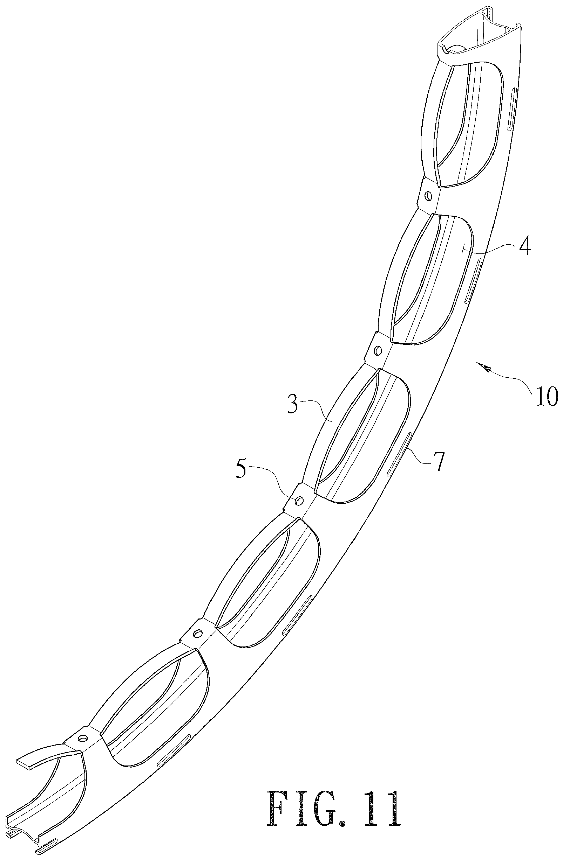

In a third preferred embodiment and a fourth preferred embodiment of this invention, the positions of the milled through holes (4) are changed in the step C. That is, the through holes (4) are formed by milling along the two side walls (1) of the rim frame's embryo at a predetermined interval (please referring to Fig. 10 and Fig. 11). Those spoke coupling holes (5) are milled and formed on the inner rim wall (3). Each of the spoke coupling holes (5) is not disposed at positions corresponding to any one of the through holes (4) but at positions between the adjacent two through holes (4). The inner rim wall (3) between the spoke coupling holes (5) is arcuately recessed toward the connecting wall (2) (please referring to Fig. 10) or arcuately protruded away from the connecting wall (2) (please referring to Fig. 11).

In the first, second, third and fourth preferred embodiments of this invention, the material of the metal substrate is one of aluminum alloy and magnesium alloy. The magnesium alloy is a highly active metal and can be easily oxidized. Therefore, the magnesium alloy cannot be exposed in the air for a long time. The carbon fiber layer formed by covering carbon fiber clothes on the magnesium alloy can prevent the magnesium alloy from oxidizing and increase the durability thereof.

In this invention, the structure of the carbon fiber rim made by the method described above comprises a rim frame (10) and a carbon fiber layer (30) covered thereon. The rim frame (10) comprises two side walls (1), a connecting wall (2) connecting opposite terminal surfaces of the side walls (1), an inner rim wall (3) connecting the radial inner edges of the side walls (1) to form a space surrounded by the side walls (1), the connecting wall (2), and the inner rim wall (3), plural through holes (4), and plural spoke coupling holes (5). These through holes (4) are formed by milling along the two side walls (1) of the rim frame (10) at a predetermined interval. The spoke coupling holes (5) are formed on the inner rim wall (3) and at positions not corresponding to any through hole (4) but between the adjacent two through holes (4). The carbon fiber layer (30) covers a surface of the rim frame (10) and the through holes (4). The inner rim wall (3) between the spoke coupling holes (5) is arcuately recessed toward the connecting wall (2). Certainly, the inner rim wall (3) between the spoke coupling holes (5) also can be designed to arcuately protruded away from the connecting wall (2).

The difference between another structure of the carbon fiber rim made by the method of manufacturing the carbon fiber rim of this invention and the structure of the carbon fiber rim above is that the through holes (4) are formed by milling along the two side walls (1) and the inner rim walls (3) at a predetermined interval. Therefore, the range of each through hole (4) covers the two side walls (1) and the inner rim walls (3). The spoke coupling holes (5) is formed by milling on the inner rim wall (3). The spoke coupling holes (5) and the through holes (4) are alternatively disposed to let the two sides of the spoke coupling holes (5) are both adjacent to the through holes (4).

In addition, plural through grooves (7) are formed on the rim frame (10) by milling. The positions of the through grooves (7) are at the side walls (1) above the connecting wall (2) and corresponding to the positions of each through holes (4) (please referring to Fig. 9).

Moreover, the rim frame (10) is made of aluminum alloy or magnesium alloy.

### <Embodiment>

An aluminum alloy was heated to a moldable temperature and then extruded to form a metal strip having a width of 25 mm and a height of 29 mm. The metal strip comprises two side walls (1), a connecting wall (2) connecting opposite terminal surfaces of the side walls (1), an inner rim wall (3) connecting the radial inner edges of the side walls (1) to form a space surrounded by the side walls (1), the connecting wall (2), and the inner rim wall (3). The meaning of the "width' are the distance between the two side walls (1), and the meaning of the "height" is the distance from the bottom to the top of the side walls (1). Next, the two terminals of the strip are connected to form a circle as a rim frame's embryo. The rim frame's embryo is milled to form through holes (4) including the two side walls (1) and the inner rim wall (3) as well as the spoke coupling holes (5) on the inner rim walls (3). The spoke coupling holes (5) and the through holes (4) are disposed alternatively to form the rim frame (10). Spoke coupling elements (6) are disposed in each of the spoke coupling holes (5). Subsequently, the surface of the rim frame (10) was roughened, and a carbon fiber cloth (20) trimmed to a predetermined shape is covered on the surface of the rim frame (10) as well as the through holes (4). The layer number of the carbon fiber cloth (20) was 1. Finally, the rim frame (10) was placed in a mold and heatset to form a semi-finished carbon fiber rim. After the surface treatment, a finished carbon fiber rim was obtained.

Some comparisons are made for both the carbon fiber rim above and a traditional carbon fiber rim having 7 layers of carbon fiber cloth. The tested items include manufacturing time, weight, EN road racing test, and EN durability test. The results are listed in Table 1.

**Table 1**

| | This invention | traditional |
|---|---|---|
| manufacturing time | 20 minutes | 70 minutes |
| weight | 360 g | 380 g |
| EN road racing test | about 8100 km | about 6000 km |

From Table 1, comparing with the traditional carbon fiber rim, it can be known that the carbon fiber rim having a rim frame inside made by the method of this invention has a much shorter manufacturing time, and the weight thereof is less than the traditional carbon rim. In the EN road racing test, the carbon fiber rim was 2100 km more than the traditional carbon fiber rim. In the durability test, the carbon fiber rim of this invention is overall increased by 30% compared to the traditional carbon fiber rim.

## Claims

1. A manufacturing method of carbon fiber rims, comprising:
A. forming a metal strip having a needed shape by heating a metal substrate to a moldable temperature and then being extruded, wherein the metal strip comprises two side walls (1), a connecting wall (2) connecting opposite terminal surfaces of the side walls (1), and an inner rim wall (3) connecting the radial inner edges of the side walls (1) to form a space surrounded by the side walls (1), the connecting wall (2) and the inner rim wall (3);
B. connecting two terminals of the strip to form a circle as a rim frame's embryo;
C. forming through holes (4) and spoke coupling holes (5) by milling the rim frame's embryo to form a rim frame (10), wherein each spoke coupling hole (5) was formed on the inner rim wall (3) and at positions not corresponding to any through hole (4) but between the adjacent two through holes (4), and each spoke coupling element (6) is disposed in each spoke coupling hole (5); **characterized in that** the method further comprises the steps of
D. performing a surface roughening treatment on the rim frame (10) having the through holes (4) and the spoke coupling holes (5) thereon to increase roughness of a surface of the rim frame (10);
E. covering a carbon fiber cloth (20) by trimming the carbon fiber cloth (20) to a suitable shape and then covering the rim frame (10) and the through holes (4) by the trimmed carbon fiber cloth (20);
F. heatsetting the rim frame (10) covered by the trimmed carbon fiber cloth (20) in a model to form a carbon fiber layer (30) on the rim frame (10) and thus form a semi-finished carbon fiber rim; and
G. treating a surface of the semi-finished carbon fiber rim to form a finishing carbon fiber rim of a bicycle.

2. The manufacturing method of claim 1, wherein the through holes (4) is formed by milling along the two side walls (1) of the rim frame's embryo at a predetermined interval, or formed by milling along the two side walls (1) and the inner rim wall (3) of the rim frame's embryo at a predetermined interval to make a range of each through hole (4) covers the two side walls (1) and the inner rim wall (3).

3. The manufacturing method of claim 1 or 2, wherein a material of the metal substrate is aluminum alloy or magnesium alloy.

4. The manufacturing method of claim 1 or 2, wherein a method of treating the surface of the semi-finished carbon fiber rim comprises steps of polishing the surface and spraying a protective layer.

5. The manufacturing method of claim 1 or 2, wherein the rim frame (10) is covered by 1-2 layers of the carbon fiber cloth (20).

6. The manufacturing method of claim 1 or 2, wherein the inner rim wall (3) between the spoke coupling holes (5) is arcuately recessed toward the connecting wall (2) or arcuately protruded away from the connecting wall (2).

7. The manufacturing method of claim 6, wherein through grooves (7) are further formed by milling the rim frame (10) and positioned on the side walls (1) above the connecting wall (2), and each of the through grooves (7) is at a position corresponding to each of the through holes (4).

8. The manufacturing method of claim 5, wherein through grooves (7) are further formed by milling the rim frame (10) and positioned on the side walls (1) above the connecting wall (2), and each of the through grooves (7) is at a position corresponding to each of the through holes (4).

9. The manufacturing method of claim 1 or 2, wherein through grooves (7) are further formed by milling the rim frame (10) and positioned on the side walls (1) above the connecting wall (2), and each of the through grooves (7) is at a position corresponding to each of the through holes (4).

10. A structure of a carbon fiber rim, which is made by the method of any one of the claims 1-9, the carbon fiber rim comprising:
a rim frame (10) and a carbon fiber layer (30) covering thereon;
wherein the rim frame (10) comprises two side walls (1), a connecting wall (2) connecting opposite terminal surfaces of the side walls (1), an inner rim wall (3) connecting the radial inner edges of the side walls (1) to form a space surrounded by the side walls (1), the connecting wall (2), and the inner rim wall (3), a plurality of through holes (4), and a plurality of spoke coupling holes (5);
wherein the plurality of spoke coupling holes (5) are formed on the inner rim wall (3) and at positions not corresponding to any through hole (4) but disposed between the through holes (4), and each spoke coupling element (6) is disposed in each spoke coupling hole (5);
wherein the carbon fiber layer (30) covers a surface of the rim frame (10) and the through holes (4), as well is penetrated by the spoke coupling elements (6) to fix a covering position of the carbon fiber layer (30).

## Patentansprüche

1. Verfahren zur Herstellung von Kohlefaser-Felgen, wobei das Verfahren die folgenden Schritte aufweist:
A. Ausformen eines Metallstreifens mit einer erforderlichen Form durch Erhitzen eines Metallsubstrats auf eine formbare Temperatur und anschließendes Extrudieren, wobei der Metallstreifen zwei Seitenwände (1), eine die gegenüberliegenden Endflächen der Seitenwände (1) verbindende Verbindungswand (2) und eine die radialen Innenkanten der Seitenwände (1) verbindende, innere Felgenwand (3) zum Ausbilden eines von den Seitenwänden (1), der Verbindungswand (2) und der inneren Felgenwand (3) begrenzten Raumes aufweist;
B. Verbinden von zwei Enden des Streifens, derart, dass ein Kreis als Felgenrahmen-Rohling ausgebildet ist;
C. Ausformen von Löchern (4) und Speichenverbindungslöchern (5) durch Fräsen des Felgenrahmen-Rohlings zu einem Felgenrahmen (10), wobei die Speichenverbindungslöcher (5) an der inneren Felgenwand (3) und an einer derartigen Stelle ausgebildet ist, dass die Speichenverbindungslöcher (5) nicht auf die Durchgangslöcher (4) ausgerichtet sind, sondern zwischen je zwei benachbarten Durchgangslöchern (4) angeordnet sind, und wobei im jeweiligen Speichenverbindungsloch (5) ein Speichenverbindungselement (6) vorgesehen ist;
**dadurch gekennzeichnet,**
**dass** das Verfahren ferner die folgenden Schritte aufweist:
D. Oberflächenaufrauungsbehandeln des mit den Durchgangslöchern (4) und den Speichenverbindungslöchern (5) versehenen Felgenrahmens (10), um die Rauigkeit einer Oberfläche des Felgenrahmens (10) zu erhöhen;
E. Beschichten der Oberfläche des Felgenrahmens (10) mit einem in einer vorgegebenen Form zugeschnittenen Kohlefaserstoff (20), wobei die Durchgangslöcher (4) gleichzeitig abgedeckt werden;
F. Heißfixieren, wobei der mit dem Kohlefaserstoff (20) beschichtete Felgenrahmen (10) in einer Form eingelegt und zur Bildung einer Kohlefaserschicht (30) erwärmt wird, wodurch sich eine halbfertige Kohlefaserfelge ergibt;
G. Oberflächenbehandeln der mit dem Kohlefaserstoff (20) beschichteten Kohlefaserfelge, wodurch ein Fertigprodukt der Kohlefaserfelge eines Fahrrads hergestellt ist.

2. Verfahren nach Anspruch 1,
**dadurch gekennzeichnet,**
**dass** die Durchgangslöcher (4) durch Fräsen entlang der beiden Seitenwände (1) des Rohlings des Felgenrahmens in einem vorbestimmten Abstand ausgebildet sind oder durch Fräsen entlang der beiden Seitenwände (1) and der inneren Felgenwand (3) des Rohlings des Felgenrahmens in einem vorbestimmten Abstand so ausgebildet sind, dass die beiden Seitenwände (1) und die innere Felgenwand (3) im Bereich jedes der Durchgangslöcher (4) liegen.

3. Verfahren nach Anspruch 1 oder 2,
**dadurch gekennzeichnet,**
**dass** das Material des Metallsubstrats aus einer Gruppe ausgewählt ist, die eine Aluminiumlegierung und eine Magnesiumlegierung aufweist.

4. Verfahren nach Anspruch 1 oder 2,
**dadurch gekennzeichnet,**
**dass** das Oberflächenbehandeln einen Schritt zum Polieren der Oberfläche der halbfertigen Kohlefaserfelge und einen Schritt zum Aufbringen einer Schutzschicht auf die Oberfläche der halbfertigen Kohlefaserfelge beinhaltet.

5. Verfahren nach Anspruch 1 oder 2,
**dadurch gekennzeichnet,**
**dass** ein bis zwei Schichten des Kohlefaserstoffs (20) auf den Felgenrahmen (10) aufgebracht werden.

6. Verfahren nach Anspruch 1 oder 2,
**dadurch gekennzeichnet,**
**dass** die zwischen den Speichenverbindungslöchern (5) befindliche, innere Felgenwand (3) bogenförmig vertieft zur Verbindungswand (2) hin angeordnet oder weg von der Verbindungswand (2) bogenförmig vorstehend ausgebildet ist.

7. Verfahren nach Anspruch 6,
**dadurch gekennzeichnet,**
**dass** Durchgangsbohrungen (7) durch Fräsen des Felgenrahmens (10) ausgebildet und an den Seitenwänden (1) über der Verbindungswand (2) angeordnet sind, wobei jede der Durchgangsbohrungen (7) dem jeweiligen Durchgangsloch (4) positionsmäßig entspricht.

8. Verfahren nach Anspruch 5,
**dadurch gekennzeichnet,**
**dass** Durchgangsbohrungen (7) durch Fräsen des Felgenrahmens (10) ausgebildet und an den Seitenwänden (1) über der Verbindungswand (2) angeordnet sind, wobei jede der Durchgangsbohrungen (7) dem jeweiligen Durchgangsloch (4) positionsmäßig entspricht.

9. Verfahren nach Anspruch 1 oder 2,
**dadurch gekennzeichnet,**
**dass** Durchgangsbohrungen (7) durch Fräsen des Felgenrahmens (10) ausgebildet und an den Seitenwänden (1) über der Verbindungswand (2) angeordnet sind, wobei jede der Durchgangsbohrungen (7) dem jeweiligen Durchgangsloch (4) positionsmäßig entspricht.

10. Kohlefaserfelge, die nach einem der Ansprüche 1 bis 9 hergestellt ist und einen Felgenrahmen (10) und eine auf diesen aufgebrachte Kohlefaserschicht (30) aufweist, wobei der Felgenrahmen (10) zwei Seitenwände (1), eine die gegenüberliegenden Endflächen der Seitenwände (1) verbindende Verbindungswand (2), eine die radialen Innenkanten der Seitenwände (1) verbindende, innere Felgenwand (3) zum Ausbilden eines von den Seitenwänden (1), der Verbindungswand (2) und der inneren Felgenwand (3) begrenzten Raumes, eine Mehrzahl von Durchgangslöchern (4) und eine Mehrzahl von Speichenverbindungslöchern (5) aufweist,
wobei die Speichenverbindungslöcher (5) an der inneren Felgenwand (3) und an einer derartigen Stelle ausgebildet ist, dass die Speichenverbindungslöcher (5) nicht auf die Durchgangslöcher (4) ausgerichtet sind, sondern zwischen den benachbarten Durchgangslöchern (4) angeordnet sind, und wobei im jeweiligen Speichenverbindungsloch (5) ein Speichenverbindungselement (6) vorgesehen ist; und
wobei die Kohlefaserschicht (30) auf eine Oberfläche des Felgenrahmens (10) aufgebracht ist und die Durchgangslöcher (4) abdeckt, wobei die Speichenverbindungselemente (6) durch die Kohlefaserschicht (30) hindurchgehen, um die Kohlefaserschicht (30) an der Beschichtungsstelle zu befestigen.

## Revendications

1. Procédé de fabrication de jantes en fibre de carbone comprenant :
A. formation d'une bande de métal ayant une forme requise en chauffant un substrat en métal à une température permettant de le mouler et qui est ensuite extrudée, la bande de métal comprenant deux parois latérales (1), une paroi de connexion (2) qui relie des surfaces terminales opposées des parois latérales (1) et une paroi de jante intérieure (3) reliant les bords intérieurs radiaux des parois latérales (1) pour former un espace entouré par les parois latérales (1), la paroi de connexion (2) et la paroi de jante intérieure (3) ;
B. connexion de deux extrémités de la bande pour former un cercle en tant qu'embryon de l'armature de la jante ;
C. formation de trous traversants (4) et de trous de couplage de rayon (5) en usinant l'embryon de l'armature de la jante pour former une armature de jante (10), chaque couplage de rayon (5) étant formé sur la paroi de jante intérieure (3) et à des positions qui ne correspondent pas à n'importe quel trou traversant (4) mais entre les deux trous traversants adjacents (4) et chaque élément de couplage de rayon (6) étant disposé dans chaque trou de couplage de rayon (5),
**caractérisé en ce que** le procédé comprend de plus les étapes de :
D. réalisation d'un traitement de rugosification de surface sur l'armature de jante (10) qui a les trous traversants (4) et les trous de couplage de rayon (5) dessus pour augmenter la rugosité d'une surface de l'armature de jante (10) ;
E. couverture d'un tissu en fibres de carbone (20) en taillant le tissu en fibres de carbone (20) pour lui donner une forme appropriée et ensuite couverture de l'armature de jante (10) et des trous traversants (4) par le tissu taillé en fibres de carbone (20) ;
F. thermofixation de l'armature de jante (10) couverte par le tissu taillé en fibres de carbone (20) en un modèle pour former une couche de fibres de carbone (30) sur l'armature de jante (10) et ensuite pour former une jante semi-finie en fibres de carbone et
G. traitement d'une surface de la jante semi-finie en fibres de carbone pour former une jante finie en fibres de carbone pour une bicyclette.

2. Procédé de fabrication selon la revendication 1, les trous traversants (4) étant formés par usinage le long des deux parois latérales (1) de l'embryon de l'armature de jante à un intervalle prédéterminé ou formés par usinage le long des deux parois latérales et de la paroi de jante intérieure (3) de l'embryon de l'armature de jante à un intervalle prédéterminé pour faire en sorte qu'une étendue de chaque trou traversant (4) couvre les deux parois latérales (1) et la paroi de jante intérieure (3).

3. Procédé de fabrication selon la revendication 1 ou 2, un matériau du substrat en métal étant un alliage d'aluminium ou un alliage de magnésium.

4. Procédé de fabrication selon la revendication 1 ou 2, un procédé de traitement de la surface de la jante semi-finie en fibres de carbone comprenant des étapes de polissage de la surface et de pulvérisation d'une couche de protection.

5. Procédé de fabrication selon la revendication 1 ou 2, l'armature de la jante (10) étant recouverte par 1 à 2 couches de tissu en fibres de carbone (20).

6. Procédé de fabrication selon la revendication 1 ou 2, la paroi de jante intérieure (3) entre les trous de couplage de rayon (5) étant évidée en forme arquée vers la paroi de connexion (2) ou étant en saillie en forme arquée en s'éloignant de la paroi de connexion (2).

7. Procédé de fabrication selon la revendication 6, des rainures traversantes (7) étant de plus formées par usinage de l'armature de jante (10) et positionnées sur les parois latérales (1) au-dessus de la paroi de connexion (2) et chacune des rainures traversantes (7) étant à une position correspondant à chacun des trous traversants (4).

8. Procédé de fabrication selon la revendication 5, des rainures traversantes (7) étant de plus formées par usinage de l'armature de jante (10) et positionnées sur les parois latérales (1) au-dessus de la paroi de connexion (2) et chacune des rainures traversantes (7) étant à une position correspondant à chacun des trous traversants (4).

9. Procédé de fabrication selon la revendication 1 ou 2, des rainures traversantes (7) étant de plus formées par usinage de l'armature de jante (10) et positionnées sur les parois latérales (1) au-dessus de la paroi de connexion (2) et chacune des rainures traversantes (7) étant à une position correspondant à chacun des trous traversants (4).

10. Structure de jante en fibres de carbone qui est fabriquée par le procédé selon l'une quelconque des revendications 1 à 9, la jante en fibres de carbone comprenant :
une armature de jante (10) et une couche de fibres de carbone (30) le recouvrant, l'armature de jante (10) comprenant deux parois latérales (1), une paroi de connexion (2) qui relie des surfaces terminales opposées des parois latérales (1) et une paroi de jante intérieure (3) reliant les bords intérieurs radiaux des parois latérales (1) pour former un espace entouré par les parois latérales (1), la paroi de connexion (2) et la paroi de jante intérieure (3), une pluralité de trous traversants (4) et une pluralité de trous de couplage de rayon (5), la pluralité de trous de couplage de rayon (5) étant formée sur la paroi de jante intérieure (3) et à des positions qui ne correspondent pas à n'importe quel trou traversant (4) mais disposée entre les trous traversants (4) et chaque élément de couplage de rayon (5) étant disposé dans chaque trou de couplage de rayon (5), la couche de fibres de carbone (30) couvrant une surface de l'armature de jante (10) et les trous traversants (4) tout en étant pénétrée par les éléments de couplage de rayon (6) pour fixer une position couvrante de la couche de fibres de carbone (30).
